# EUROPEAN PATENT SPECIFICATION

(11) **EP 4 680 425 B1**
(45) Date of publication and mention of the grant of the patent: **11.11.2026**
(21) Application number: 25723431.0
(22) Date of filing: 08.05.2025
(51) Int. Cl.: B23K 26/00, B23K 26/0622, B23K 26/352, B23K 101/34, B23K 103/10, B23K 103/18

(54) **ULTRA BLACK SURFACE**
ULTRASCHWARZE OBERFLÄCHE
SURFACE ULTRA-NOIRE

(30) Priority: 23.05.2024 EP 24177657
(43) Date of publication of application: 21.01.2026
(73) Proprietor: Sirris, 3001 Leuven (BE)
(72) Inventor: MALEK, Olivier, 3001 Leuven (BE)
(74) Representative: Gevers Patents
(86) International application number: PCT/EP2025/062642
(87) International publication number: WO 2025/242442

(56) References cited:
- US-A1- 2022 161 365
- HUAN HUANG ET AL: "Blackening of metals using femtosecond fiber laser", APPLIED OPTICS, OPTICAL SOCIETY OF AMERICA, WASHINGTON, DC, US, vol. 54, no. 2, 10 January 2015 (2015-01-10), pages 324 - 333, XP001593440, ISSN: 0003-6935, [retrieved on 20150109], DOI: 10.1364/AO.54.000324
- ANONYMOUS EDWIN ET AL: "Micro/nanostructures formation by femtosecond laser surface processing on amorphous and polycrystalline Ni60Nb40 - ScienceDirect", APPLIED SURFACE SCIENCE, vol. 396, 1 February 2017 (2017-02-01), AMSTERDAM, NL, pages 1170 - 1176, XP093300585, ISSN: 0169-4332, Retrieved from the Internet <URL:https://www.sciencedirect.com/science/article/pii/S0169433216324758?via=ihub> DOI: 10.1016/j.apsusc.2016.11.107
- ZUHLKE CRAIG A ET AL: "Fundamentals of layered nanoparticle covered pyramidal structures formed on nickel during femtosecond laser surface interactions", APPLIED SURFACE SCIENCE,, vol. 283, 9 July 2013 (2013-07-09), pages 648 - 653, XP028698367, DOI: 10.1016/J.APSUSC.2013.07.002

## Description

### FIELD OF THE INVENTION

The invention relates to the field of ultra black surfaces capable of absorbing at least 98% of radiation in a wavelength range of 300 nm to 20 µm. In particular, it concerns micro / nano textured surfaces produced by ultrashort pulsed (USP)-laser treatment of a specific substrate. The ultra black surface also has a high emissivity of above 0.98 over broad range of infrared wavelengths.

### BACKGROUND OF THE INVENTION

Ultra black surfaces have both commercial and technical interest. In the space industry, with their high emissivity, they can be used as passive cooling systems for electronic and other components mounted on board of satellites. For their high absorbance of radiations, they can be used with optical instruments, mirrors, and sensors to reduce the effects of stray and scattered light or to improve absorbance of thermal detectors, heat sinks, and solar cells. The properties of high absorbance, high emissivity can also be taken advantage of in more earthly applications such as solar panels and solar collectors.

Ultra black surfaces can be obtained by coating a substrate, chemically etching a surface, or texturizing a surface with a femtosecond (fs-) or picosecond (ps-) laser treatment, collectively referred to as ultrashort pulsed (USP-) laser. The present invention concerns ultra black surfaces obtained by treating a specific substrate by a USP-laser treatment. The USP laser treated ultra black surfaces have the advantage over coated substrates to be substantially more robust to wear and degradation than the coated substrates. They have the advantage over the chemically etched surfaces to have a generally higher absorbance and emissivity than chemically etched surfaces, and to allow for more freedom of treatment.

There is extensive literature on USP-laser treated ultra black surfaces, with absorbance and emissivity properties varying substantially depending *inter alia* on the nature of the substrates thus treated. For example, surfaces of titanium substrates treated with fs-laser are described by Vorobyev and Guo in [1]. Micro- and nano-textured surfaces of Nickel produced by a fs-laser
¹ Vorobyev, A, and Guo, C., "Optical and Wetting Properties of Femtosecond Laser Nanostructured Materials", J. Nano Research 14 (2011), 57-67. treatment are described e.g., by Zuhlke et al. (2013-1) in [2]. Peng et al. [3] describes a nanostructured Ni₆₀Nb₄₀ surfaces -amorphous and crystalline- treated by fs laser. Peng et al. do not characterise the absorption of the nanostructured surface. Zuhlke et al. (2013-2) [⁴] describes the formation of nanoparticle covered pyramids (= NC-pyramids) by fs laser ablation of a Nickel surface. NC-pyramids have a pyramidal shape of aspect ratio near 1:1 and are covered with a thick layer of nanoparticles (typically >2 jum thick). Zuhlke et al. (2013-2) do not characterise the absorption of the nanostructured surface.Aluminium surfaces treated by fs-laser treatment are described e.g., by Li et al. in [5].
²Zuhlke, C. et al., "Comparison of the structural and chemical composition of two unique micro/nanostructures produced by femtosecond laser interactions on nickel" Applied Physics Letters 103, (2013)121603 1-5.
³ Peng, E. et al.," Micro/nanostructures formation by femtosecond laser surface processing on amorphous and polycrystalline Ni60Nb40, Applied Surface Science," 396 (2017) 1170-1176
⁴ Zuhlke, C. et al., " Fundamentals of layered nanoparticle covered pyramidal structures formed on nickel during femtosecond laser surface interactions" Applied Surface Science," 283 (2013) 648-653.
⁵ Li, G. et al., "Evolution of aluminum surface irradiated by femtosecond laser pulses with different pulse overlaps," Applied Surface Science 276 (2013) 203-209.

All previously cited references describe surfaces of homogeneous, monolithic substrates of the corresponding material. US20220161365 describes fs-laser treatment of multilayered substrates, wherein the texturing extends through several layers of the substrate. Different layers sequences are described including layers made of iron, iron containing metal alloys, steel, stainless steel, copper, aluminium, platinum, silver, gold, nickel, zinc. This facilitates *inter alia* the production of microstructured surfaces with materials which are otherwise difficult to texture when used alone. An example is given for stainless steel, which can be more easily textured when fs-laser processed with a copper layer applied on top of it.

All previously cited documents describe fs-laser textured surfaces as comprising mounds or protrusions separated from one another by valleys at a microscopic scale, and a layer of nanoparticles coating the flanks of the protrusions. The nanoparticles are described as material eroded off the treated surface as the valleys are being formed by the fs-laser beam and redeposited on the flanks of the thus formed protrusions to form a spongy-like structure, sometimes compared to a nanoscopic coral or cauliflower structure. The high absorption generally observed in such materials is described as a combination of penetration of the radiation rays deep into the valleys reflected against the flanks of the protrusions and because of their scattering when interacting with the nanoparticles forming the flanks of the protrusions, the rays are trapped in the porosity of the surface as they are unable to propagate out of the valleys.

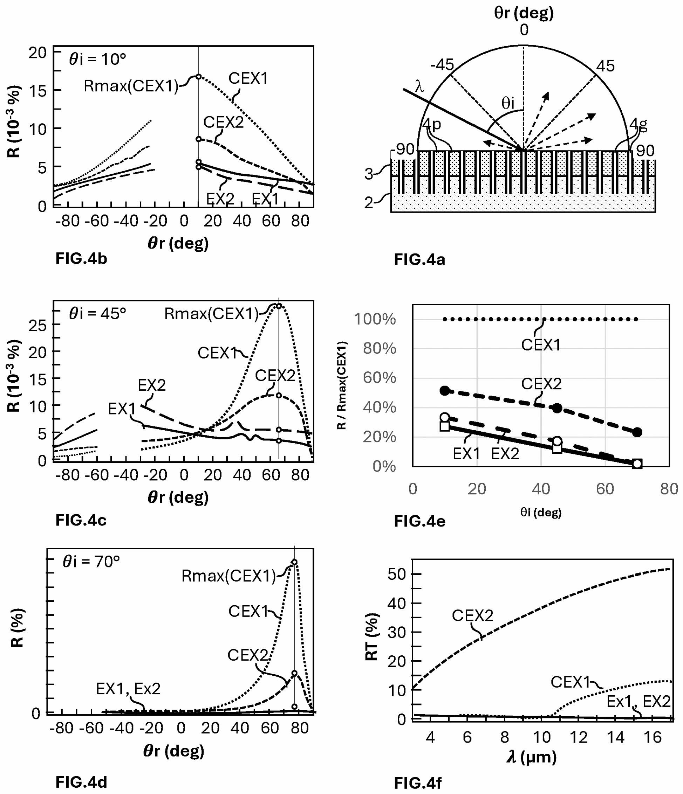

Ultra black surfaces of the prior art generally show high values of absorbance at least in the visible light (this is why ultra black surfaces appear black to the naked eye) and in the near infrared region. As illustrated in Figure 4f (cf. comparative examples CEX1 and CEX2), however, total hemispherical absorption often drops (or reflectance increases) for radiations of wavelengths above about 1 to 10 µm.

The present invention proposes a USP-laser textured ultra black surface comprising a specific substrate and specific multiscale micro- and nano-structure which yields high values of both absorption and emissivity over large ranges of radiation wavelengths. These and other advantages are described in continuation.

### SUMMARY OF THE INVENTION

The present invention concerns an ultra black surface comprising a substrate formed by a metal base made of a first material, coated with a layer having a thickness (t_Ni) and made of a second material, different from the first material, and defining in combination the ultra-black surface. The ultra-black surface is structured with a multiscale micro and nano texture formed by a ultrashort pulsed (USP)-laser treatment.

The first material of the metal base is aluminium or an aluminium alloy (= Al-alloy). The second material of the layer is a nickel-alloy (= NiX-layer) comprising at least 5 wt.% of a compound enhancing oxygen evolution reaction (OER) of nickel.

The multiscale micro and nano texture comprise a microtexture and an nanotexture. The microtexture comprises protrusions arranged side-by-side separated from one another by grooves defining a peak-to-valley height (h) not lower than the layer thickness (i.e., h ≥ t_Ni), wherein a thickness to height ratio (t_Ni / h) of the layer thickness (t_Ni) to the peak-to-valley height (h) is preferably comprised between 30 and 80%, more preferably between 40 and 67%. The nanotexture comprises a nanostructured layer coating the surfaces of the protrusions and comprising Al-Ni oxides with varying values of a molar Al to Ni ratio,

The ultra-black surface has an absorbance of at least 95%, preferably of at least 97%, more preferably of at least 98% over a wavelength (*λ*) extending from 300 nm to at least 35 µm, and an emissivity of at least 0,95 in a wavelength range of 3 to at least 35 µm, wherein the absorbance and emissivity are measured according to standards ECSS-Q-70-09A and ASTM E 490. This covers the whole ranges of near and mid infrared radiations (for example, near IR = 0.7 - 5 µm, mid-IR = 5-35 µm, far IR = 35-350 µm). Preliminary results suggest that very high absorbance and emissivity values of least 90% or even 95% can be obtained at far-IR wavelengths, *λ*, of up to 100 ± 50 µm, or 100 ± 25 µm, or 100 ± 10 µm. Further tests with an equipment more reliable at higher wavelengths in the far IR are planned in a near future to confirm these preliminary results.

The compound in the Ni-X layer can be phosphorus (P) or boron (B) and can be present in an amount comprised between 7 and 17 wt.% of P or B, preferably between 8 and 15 wt.% based on the total weight of the layer.

In an embodiment, the peak-to-valley height (h) can be comprised between 60 and 120 µm, preferably between 80 and 105 µm. In an embodiment, the thickness (t_Ni) of the layer can be comprised between 20 and 100 µm, preferably between 30 and 80 µm, more preferably between 50 and 75 µm. In an embodiment, a ratio (t_Ni / h) of the layer thickness (t_Ni) to the peak-to-valley height (h) is comprised between 0.3 and 1.0, preferably between 0.5 and 0.9. In an embodiment, the tops of the protrusions can have a width (w4) measured along a groove comprised between 25 and 50 µm, preferably between 30 and 40 µm. The grooves can have a width (wg) at the top of the protrusions comprised between 5 and 25 µm, preferably between 7 and 18 µm.

The nanostructured layer can have a thickness comprised between 1 and 12 µm, preferably between 2 and 10 µm, more preferably between 4 and 8 µm. The grooves can be rectilinear and extend along two directions forming a diamond lattice, preferably a rectangular or a square lattice. Alternatively, the grooves can be rectilinear and extend along three directions forming a triangular lattice. In another embodiment, the grooves can form segmented lines forming a polygonal lattice of more than 4 sides, preferably forming a hexagonal lattice. In yet an alternative embodiment, the grooves can form curved lines winding along at least two directions, preferably along two or three directions.

The nanostructured layer preferably comprises aluminium-nickel oxides (Al-Ni-O) in greater amounts at the level of the layer than at the level of the metal base and aluminium oxides (Al-O) in greater amounts at the level of the metal base than at the level of the layer.

The absorbance of the ultra black surface of the present invention can be at least 98%, preferably at least 99% in a wavelength range extending between 300 nm and 5 µm. The emissivity of the ultra black surface of the present invention can be at least 0,98, preferably at least 0,99 in the wavelength range of 3 to at least 35 µm.

The present invention also concerns a process for forming the ultra black surface of the present invention as defined supra. The process comprises first providing the substrate as defined supra, formed by the metal base made of aluminium or an aluminium alloy (= Al-alloy) and coated with the layer of thickness (t_Ni), which defines a surface, followed by irradiating the surface with ultrashort pulsed (USP)-laser pulses such as to form the multiscale micro and nano texture as defined supra and thus obtain the ultra black surface.

In an embodiment of the present invention, the successive USP laser pulses overlap (Φ) from -0.3 to 0.9, preferably from 0 to 0.6, wherein Φ = 1 - (D / d), with D is a distance between two successive pulse spots and d is a diameter of the pulse spots, wherein both D and d are measured along a direction of displacement of a USP-laser beam.

The USP-laser can be set to operate according to one or more of the following,
- a pulse duration comprised in the range of 50 fs to 10 ps, and / or
- a fluence is comprised between 2 - 10 J / cm², preferably between 3,4 - 8 J / cm², and / or
- a frequency is comprised between 50 and 500 kHz, and / or
- a pitch comprised between laser paths of 25 to 45 µm, and / or
- a scanning speed between 50-4000 mm/s, preferably between 100-2000 mm/s, and / or
- a spot Diameter of 10-30 µm, and / or
- a number of laser passes between 20 to 1600, preferably between 800 to 1600.

### SHORT DESCRIPTION OF THE DRAWINGS

These and further aspects of the invention will be explained in greater detail by way of example and with reference to the accompanying drawings in which,
**Figures 1a** shows a top view of an ultra black surface according to the present invention with a square array of USP-laser formed valleys separating protrusions.
**Figures 1b to 1e** show different patterns formed by the valleys of the ultra black surface of the present invention, 1b = square pattern, 1c = diamond pattern, 1d = triangular pattern, and 1d = honeycomb pattern.
**Figure 2** shows a schematic representation of the multiscale structure of the ultra black surface of the present invention.
**Figures 3a and 3b** show side cut views at different magnifications, showing, 3a = cross sections of a succession of protrusions and valleys, and 3b = zoom on the nanostructured layer coating the flanks of the protrusions.
**Figure 4a** shows the experimental set up used for generating the curves of Figures 4b to 4f.
**Figure 4b to 4d** show reflectance (R) as a function of the reflected angle *θ*r of an incident radiation of wavelength 500-600 nm, with incident angles, *θ*i = 10°, 45°, and 70°, respectively, for EX1 and EX2 = two ultra black surfaces according to the present invention and CEX1 and CEX2 = two ultra black surfaces of the prior art.
**Figure 4e** shows the reflectance of the four ultra black surfaces of Figures 4b to 4d relative at to the maximum reflectance of CEX2 defined as the reference value 100%, as a function of the incident angle *θ*i.
**Figure 4f** shows the total hemispherical reflectance of the four ultra black surfaces of Figures 4b to 4d as a function of the wavelength of the incident radiation, as measured according to ECSS Q 70 09A and ASTM E 490.
**Figure 5a** shows a bar diagram of the absorption of ultra black surfaces according to the present invention having a Ni-layer of thicknesses t_Ni = 25 µm (white columns) and 50 µm (shaded columns) for two values of the peak-to-valley height, h = 46 µm and 80 µm, respectively.
**Figure 5b** shows emissivity (*ε*) as a function of the Ni-layer thickness (t_Ni) for different values of the peak-to-valley height, h = 46 µm, 58 µm, 70 µm, and 80 µm.
**Figure 5c** shows emissivity (*ε*) as a function of the peak-to-valley height (h) for different values of the Ni-layer thickness, t_Ni = 0 µm, 34 µm, 50 µm, 70 µm, and 100 µm.
**Figure 5d** shows emissivity (*ε*) as a function of the ratio (t_Ni / h) of the Ni-layer thickness (t_Ni) to the peak-to-valley height (h), for different values of the peak-to-valley height, h = 46 µm, 58 µm, 70 µm, and 80 µm.
**Figure 5e** shows emissivity (*ε*) as a function of the ratio (t_Ni / h) of the Ni-layer thickness (t_Ni) to the peak-to-valley height (h), for different values of the Ni-layer thickness, t_Ni = 0 µm, 34 µm, 50 µm, 70 µm, and 100 µm.
**Figure 5f** shows a bar diagram of the emissivity (*ε*) of ultra black surfaces according to the present invention having a Ni-layer containing 7 wt.% P and 11 wt.% P.
**Figures 6a to 6d** illustrate overlapping of the USP-laser beam spots, 6a = superimposed spots, 6b = overlapping spots, 6c = abutting spots, and 6d = separate spots, with corresponding values of the parameters d / D and Φ = -*δ* / d, where d = spot diameter in the beam displacement direction, and D is the distance between two spots (= pitch), *δ* = distance separating two spots, with Φ = 1 - (D / d).
**Figures 7a and 7b** show the emissivity (*ε*) as a function of spots overlap expressed as d / D in Figure 7a and as Φ = -*δ* / d in Figure 7b.
**Figure 8a** illustrates schematically a protrusion of an ultra black surface according to the present invention, defining the parameters used in Figure 8b.
**Figure 8b** illustrates qualitatively the contents of Al, Ni, and O measured by SEM-EDX as a function of the peak-to-valley height (h) in a protrusion as illustrated in Figure 8a.
**Figures 9a and 9b** illustrate a tentative mechanism of the contribution of P or B in the Ni-layer to the production of a textured surface with superior absorbance and emissivity, Figure 9a illustrates a valley in formation by the action of a USP-laser beam eroding the flanks of the protrusions being formed and creating a plasma and Figure 9b illustrates the activation energy for formation of oxygen by OER as a function of pure Ni, and for Ni containing either P or B.

### DETAILED DESCRIPTION OF THE INVENTION

The present invention concerns an ultra black surface obtained by texturing a surface of a substrate formed by a metal base (2) made of aluminium or an aluminium alloy (= Al-alloy), coated with a layer of thickness (t_Ni) made of a nickel-alloy (= NiX-layer) (3). The NiX-layer (3) comprises at least 5 wt.% of a compound enhancing oxygen evolution reaction (OER) of nickel. The compound is preferably selected among P and B.

Texturing of the ultra-black surface is performed by a ultrashort pulse (USP-) laser treatment to yield a multiscale micro and nano texture. The ultra black surface is defined by the thus textured combination of the metal base (2) and NiX layer (3).

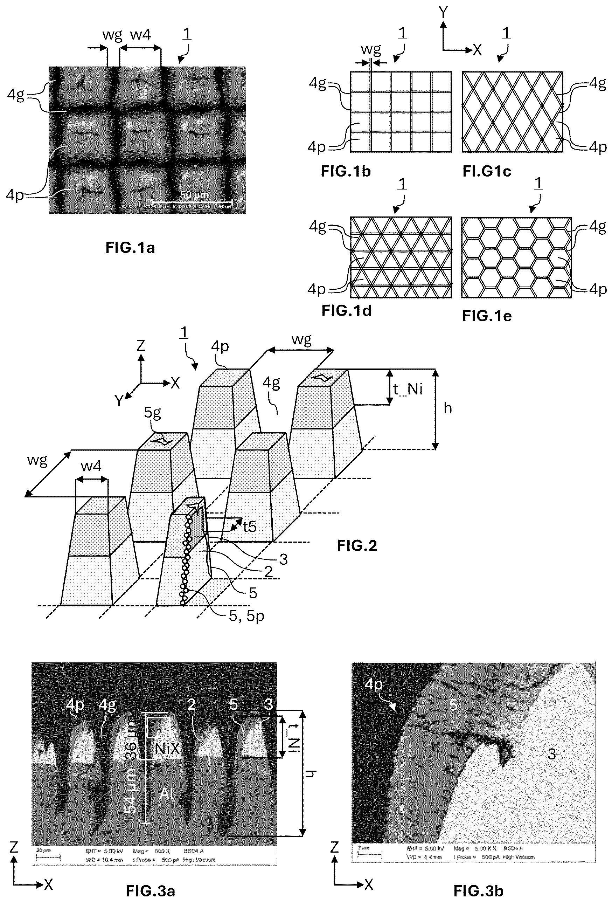

As illustrated schematically in Figure 2 and shown in the micrographs of Figures 1, 3a, and 3b, the multiscale micro and nano texture comprises a microtexture comprising protrusions (4p) separated from one another by grooves (4g), and a nanotexture comprising a nanostructured layer (5) coating the surfaces of the protrusions. The protrusions (4p) are arranged side-by-side separated from one another by the grooves (4g) defining a peak-to-valley height (h) of at least the layer thickness (i.e., h ≥ t_Ni), wherein a thickness to height ratio (t_NiX / h) of the layer thickness (t_Ni) to the peak-to-valley height (h) is preferably comprised between 30 and 80%, more preferably between 40 and 67%. The nanostructured layer (5) coats the flanks of the protrusions and comprise Al-Ni oxides with varying values of a molar Al to Ni ratio,

The ultra-black surface of the present invention has an absorbance of at least 95% over a wavelength (*λ*) extending from 300 nm to at least 35 µm, and an emissivity of at least 0,95 in a wavelength range of 3 to at least 35 µm, wherein the absorbance and emissivity are measured according to standards ECSS-Q-70-09A and ASTM E 490.

An ultrashort pulse (USP-) laser is defined as a laser emitting pulses of duration of the order of the picosecond (1 ps = 10⁻¹² s) or less. USP-laser are configured to emit for example picosecond (ps-) laser pulses down to femtosecond (fs-) laser pulses (1 fs = 10⁻¹⁵ s).

The absorbance (*α*) of the surface is measured according to ECSS-Q-70-09A using a spectrometer. It is calculated from the integrated material spectral absorbance A(*λ*) = 1 - R(*λ*), wherein R is the reflectance, over a wavelength range spanning from *λ*1 to *λ*2, weighted by the spectral solar irradiance S(*λ*), given by the ASTM E 490 standard. Absorbance (*α*) is thus calculaed as follows, $α = 1 - \left({\int }_{λ 1}^{λ 2} R \left(λ\right) S \left(λ\right) dλ\right) / \left({\int }_{λ 1}^{λ 2} S \left(λ\right) dλ\right)$

The emissivity (*ε*) of the surface is also measured according to ECSS-Q-70-09A using an IR-spectrometer relying on the optical measurement of spectral absorbance. The emissivity in the IR-region is then obtained from the integration of the spectral absorptance weighted by the blackbody emission at the temperature of interest, E(*λ*), determined with Planck's law, over the range spanning from *λ*1 to *λ*2, $ε = 1 - \left({\int }_{λ 1}^{λ 2} \left(R\left(λ\right)+T\left(λ\right)\right) E \left(λ\right) dλ\right) / \left({\int }_{λ 1}^{λ 2} E \left(λ\right) dλ\right) = 1 - \left({\int }_{λ 1}^{λ 2} R \left(λ\right) E \left(λ\right) dλ\right) / \left({\int }_{λ 1}^{λ 2} E \left(λ\right) dλ\right)$ The surface features a zero transmittance in the mid-infrared region, i.e., A(*λ*) = 1 - R(*λ*) - T(*λ*), with T(*λ*) = 0, thus allowing the above simplification.

### SUBSTRATE = Al-BASE (2) AND NiX LAYER (3)

As will be shown in continuation, the nature of the substrate is an essential aspect of the present invention, as it contributes to yielding an ultra black surface with high values of absorbance and emissivity over a very broad range of radiation wavelengths. The substrate is formed by a metal base (2) made of a aluminium or an aluminium alloy, coated with a layer (3) having a thickness (t_Ni) and made of a nickel alloy (NiX). The NiX layer (3) can have a thickness (t_Ni) comprised between 20 and 100 µm, preferably between 30 and 80 µm, more preferably between 50 and 75 µm.

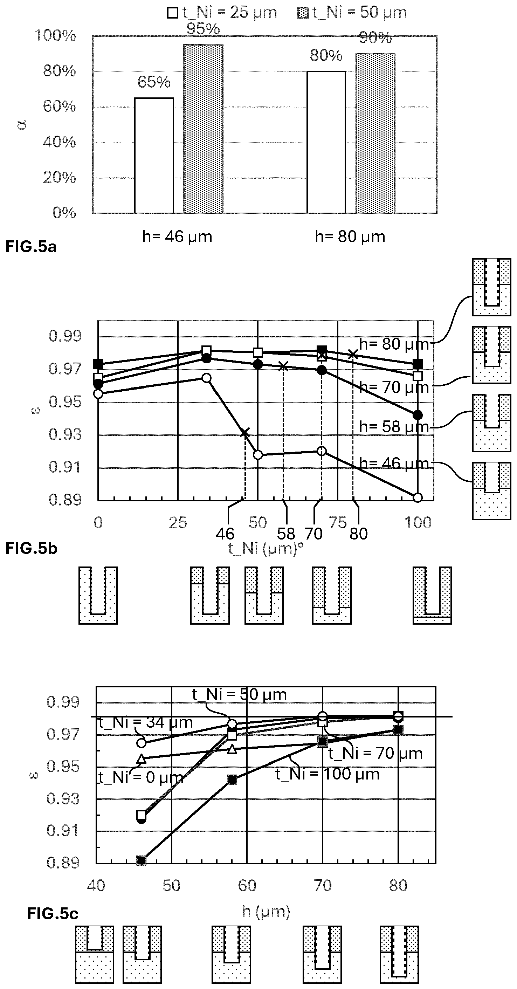

Figure 5a shows that absorbance (*α*) is higher for a layer thickness t_Ni = 50 µm (= shaded columns) than for a layer thickness, t_Ni = 25 µm (= white columns) regardless of the peak-to-valley height value of h = 46 µm and 80 µm. Figure 5b shows the emissivity (*ε*) of the ultra black surfaces as a function of the layer thickness (t_Ni) for different values of the peak-to-valley height, h = 46 µm, 58 µm, 70 µm, and 80 µm. It can be seen that for all values of the peak-to-valley height (h), emissivity increases with increasing layer thickness (t_Ni) until reaching a plateau before dropping at various rates at higher layer thicknesses (tNi) approximately corresponding to the values of the layer thickness, t_Ni = h, identified by the crosses. The crosses indicate the points where t_Ni = h, beyond which the grooves (4g) do not reach the Al-base (2) anymore and behave like the surface of a monolithic support made of NiX-alloy

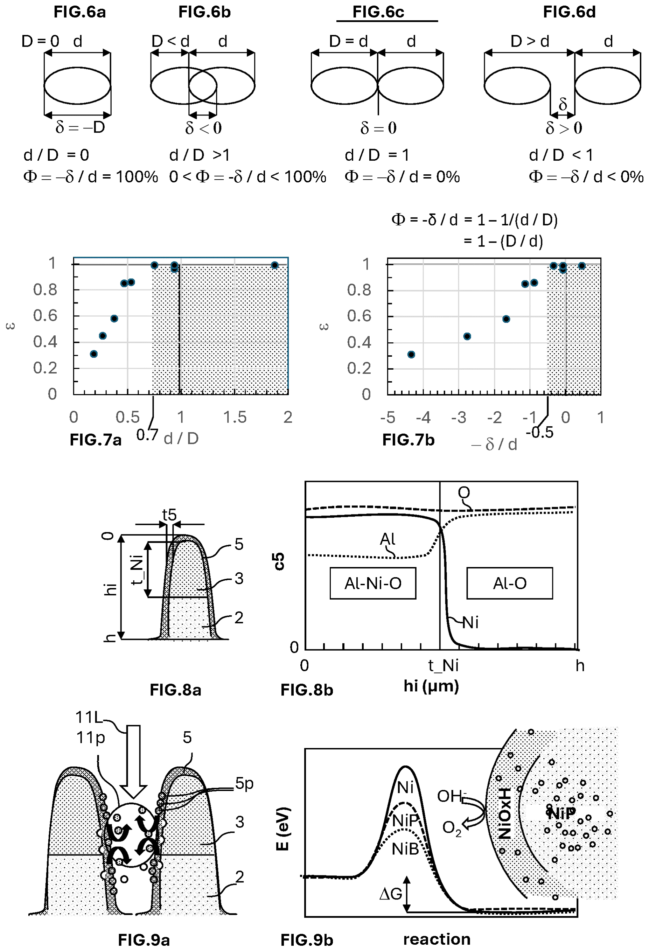

The NiX-layer (3) comprises at least 5 wt.% of a compound enhancing the oxygen evolution reaction (OER) of nickel. Oxygen evolution reaction (OER) is a limiting reaction in the process of generating molecular oxygen through chemical reactions. Preferred such compounds include phosphorus (P) or boron (B). As shown in Figure 9b, freely inspired from [6], such compounds lower the activation energy for OER, thus promoting the formation of oxygen in the
⁶ Masa et al. "Role of Boron and Phosphorus in Enhanced Electrocatalytic Oxygen Evolution by Nickel Borides and Nickel Phosphides", ChemElectroChem, 6, (1), 235-240. plasma formed in the valleys or grooves (4g) as they are being formed by the USP-laser treatment. This oxygen is available to form oxides with Ni and Al- atoms which are being eroded by the USP-laser treatment.

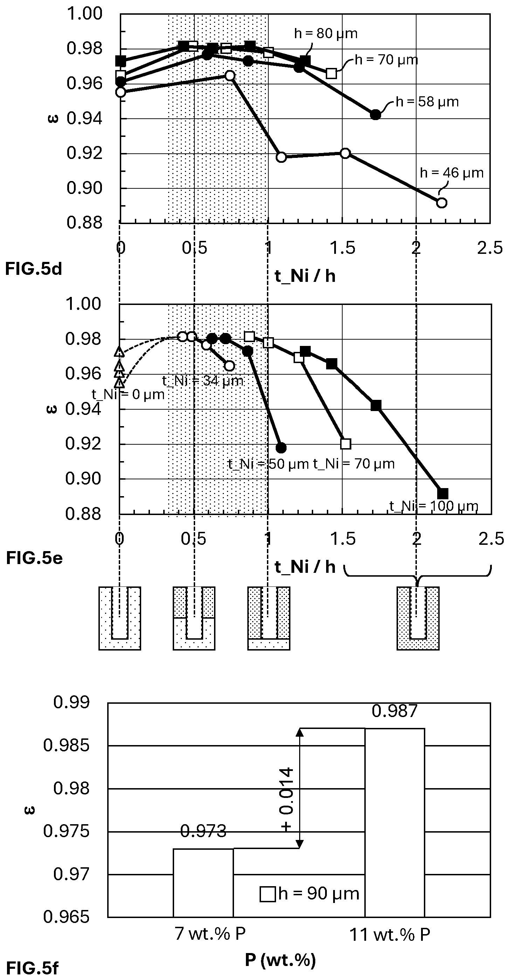

The component is preferably present in an amount comprised between 7 and 17 wt.% of P or B, more preferably between 8 and 15 wt.% based on the total weight of the layer (3). As shown in Figure 5f, the emissivity (*ε*) of the ultra black surface is increased when increasing the P-contents in the NiX layer (3) from 7 wt.% to 11 wt.%. This is in total contradiction with the paper [7] by Brown et al., describing the absorbance of chemically etched nickel-phosphorus black surfaces, with a clear degradation in Figure 1 of [5] of the absorbance (i.e., an increase of the reflectance) of the chemically etched surface for P-contents in the Nickel of more than 7 wt.%.
⁷ Brown, R. et al., "The physical and chemical properties of electroless nickel-phosporous alloys and low reflectance nickel-phosphorus black surfaces" J. Mater. Chem., 12 (2002) 2749-2754

The NiX layer (3) can be applied onto the Al-base (2) by any known coating method, including PVD (e.g., sputtering), CVD, electroplating, and the like Substrates made of an Al- or Al-alloy base (2) coated with an NI-X layer (3) are commercially available on the market with a broad variety of layer thicknesses (t_Ni) and compositions of noth Al-alloys and Ni-alloys (NiX), as there is a great demand for such materials in the aerospace industry.

### MICROTEXTURE - PROTRUSIONS (4p) AND GROOVES (4g)

A shown in Figures 1a, 2, and 3a, the microtexture of the ultra black surface of the present invention comprises protrusions (4p) arranged side-by-side separated from one another by grooves (4g) forming the valleys and defining a peak-to-valley height (h) larger than or equal to the layer thickness (i.e., h ≥ t_Ni).

### Microtexture - protrusions (4p)

As can be appreciated from Figures 1a, 2, and 3a, the protrusions (4p) have a larger base than top and form approximate truncated cones or truncated pyramids, wherein a cone is a 3D-shape tapering smoothly from a flat base of any geometry to an apex, and a pyramid is a cone having a polygonal base. The geometrical dimensions of the protrusions can be defined by the peak-to-valley height (h) and by the dimensions of the tops of the protrusions (4p). For example, the tops of the protrusions (4p) can have a width (w4) measured along a groove (4g) comprised between 25 and 50 µm, preferably between 30 and 40 µm The peak-to-valley height (h) separating the bottom of a valley to the peak of a protrusion, is preferably comprised between 60 and 120 µm, more preferably between 70 and 105 µm, more preferably between 80 and 100 µm. Figure 5c shows the emissivity of ultra black surfaces as a function of the peak-to-valley height (h) for substrates having NiX-layers of different thicknesses, t_Ni = 0 µm (i.e., no NiX layer (3)), 34 µm, 50 µm, 70 µm, and 100 µm. All surfaces show an improvement of emissivity with increasing peak-to-valley height (h), which is not surprising since, radiations would intuitively seem to be more efficiently trapped in a deep valley than in a shallow one.

With the scale of the abscissa in Figure 5c, the peak-to-valley heights of the surface having a layer thickness, t_Ni = 34 µm (cf. Figure 5c, white circles) are always larger than the layer thickness (t_Ni), i.e., 34 µm / h < 1 and thus according to the present invention for all points represented, because the point where h = t_Ni = 34 µm is out of the abscissa range. For the samples having a layer thickness, t_Ni = 50 and 70 µm (cf. Figure 5c, black circles and white squares), it can be seen that emissivity increases substantially when the peak-to-valley becomes larger than the layer thickness (t_Ni), i.e., h ≥ t_Ni or t_Ni / h < 1). All surfaces having a ratio t_Ni / h < 1 tend towards a same value of the emissivity when the peak-to-valley height h = 100 µm of about 98%.

By contrast, with the scale of the abscissa in Figure 5c, the peak-to-valley heights of the surface having a layer thickness, t_Ni = 100 µm (cf. Figure 5c, black squares) is always smaller than the layer thickness (t_Ni), i.e., 100 µm / h > 1 and therefore out of the scope of the present invention, for all points represented, because the point where h = t_Ni = 100 µm is out of the abscissa range. The surface with t_Ni = 100 µm therefore behaves like a textured surface of a monolithic NiX-alloy substrate. The surface with t_Ni = 0 µm (cf. Figure 5c, white triangles) does not have a NiX layer and is a textured surface of a monolithic Al substrate. It can be seen that with a shallow texture of h = 46 µm, Al shows substantially higher emissivity than the NiX-alloy. With increasing peak-to-value height, both Al and NiX-alloy reach similar values of emissivity of about 97% at a peak-to-valley height, h = 100 µm. This is lower by one percentage point than the maximum emissivity reached when the ratio t_Ni / h < 1, in accordance with the present invention. This demonstrates that the thickness to height ratio (t_Ni / h) is important for the properties of the ultra black surface.

The thickness to height ratio (t_Ni / h) of the layer thickness (t_Ni) to the peak-to-valley height (h) defines the composition of the protrusions as a function of the height position, like the geological strata of a mountain. A ratio t_Ni / h = 1, defines a valley as deep as the NiX layer (3) is thick. The protrusions (4p) are composed entirely of NiX alloy and rest on a layer of Al. Ratio values, t_Ni / h < 1, define protrusions having a base in Al(-alloy) and a top in NIX-alloy. Finally, ratio values, t_Ni / h > 1, define protrusions (4p) made entirely of NiX-alloy resting on a NiX-alloy base. The ultra black surface having a ratio t_Ni / h > 1 behaves like a monolithic substrate of NiX-alloy, the Al-base (2) having no substantial effect on the absorbance and emissivity properties of the ultra-black surface.

The thickness to height ratio (t_Ni / h) of the ultra black surfaces of the present invention is not greater than 100% and is preferably comprised between 30 and 100% (cf. shaded area in Figures 5d and 5e), more preferably between 40 and 80%, most preferably between 50 and 67%. Figure 5d represents the emissivity of the surfaces plotted in Figures 5b and 5c discussed supra, as a function of the t_Ni / h ratio for different values of the peak-to-valley height, h = 46 µm, 58 µm, 70 µm, and 80 µm. It can be seen that for all values of the peak-to-valley height (h), the emissivity reaches a maximum value of about 98% for a t_Ni / h ratio ranging between 0.3 and 1 (cf. shaded area).

The same conclusion can be reached from Figure 5e, plotting emissivity as a function of t_Ni / h ratio for different values of the layer thickness, t_Ni = 0 µm, 34 µm, 50 µm, 70 µm, and 100 µm. Interestingly, although the range of the t_Ni / h ratio comprising the maximum emissivity appears to be independent of the layer thickness (t_Ni). The emissivity drop rate beyond the range of maximal emissivity seems to decrease with increasing layer thickness (t_Ni) indicating that, not surprisingly, peak-to-valley height (h) clearly plays a leading role in emissivity, but also that the presence of the NiX-layer (3) and the thickness thereof also controls the emissivity properties of the ultra black surface.

### Microtexture - grooves (4g) forming the valleys

As shown in Figures 1a, 2, and 3a, the protrusions are separated from one another by grooves (4g) forming valleys between adjacent protrusions. The geometry of the grooves defines *inter alia* the geometry of the bases of the protrusions (4p). The grooves (4g) preferably define a regular pattern over the area of the surface. For example, the grooves (4g) can be rectilinear and extend along two directions forming a diamond lattice, preferably a rectangular or a square lattice, as shown in Figures 1a to 1c and 2. Alternatively, the grooves (4g) can be rectilinear and extend along three directions forming a triangular lattice as illustrated in Figure 1d. In another embodiment, illustrated in Figure 1e, the grooves can form segmented or broken lines forming a polygonal lattice of more than 4 sides, preferably forming a hexagonal lattice. The groove lattices illustrated in Figures 1a to 1d made of straight segments define protrusions having polygonal bases and whose geometry can be compared with truncated pyramids, as shown in Figure 2. Finally, the grooves can follow curved lines winding along at least two directions, preferably along two or three directions (not shown).

The grooves (4g) can have a width (wg) at the top of the protrusions comprised between 5 and 25 µm, preferably between 7 and 18 µm, more preferably between 10 and 15 µm. the depth of the grooves (4g) is defined by the peak-to-valley height (h) discussed supra. The flanks of the protrusions defining the walls of the valleys formed by the grooves (4g) are covered by a nanostructured layer (5).

### NANOTEXTURE - NANOSTRUCTURED LAYER (5)

The nanotexture comprises a nanostructured layer (5) coating the surfaces of the protrusions. SEM observation showed as in Figure 3b, that the nanostructured layer (5) comprises nanoparticles (5p) forming a cauliflower or coral structure as already described in the art. The nanostructured layer (5) can have a thickness (t5) comprised between 1 and 12 µm, preferably between 2 and 10 µm, more preferably between 4 and 8 µm

SEM-EDX analyses revealed that the nanostructured layer (5) comprises Al-Ni oxides with varying values of a molar Al to Ni ratio. As qualitatively plotted in Figure 8b, the nanostructured layer (5) as illustrated in Figure 8a, comprises,
- aluminium-nickel oxides (Al-Ni-O) in greater amounts at the level of the layer (3) than at the level of the metal base (2), i.e., higher amounts of Al-Ni-O at heights (hi) comprised between 0 and t_Ni (refer to Figure 8a for the definition of hi which extends from 0 at the top of a protrusion to the peak-to-valley height (h) at the bottom of the valley), and
- aluminium oxides (Al-O) in greater amounts at the level of the metal base (2) than at the level of the layer (3), i.e:, higher amounts of Al-O at heights (hi) comprised between t_Ni and.h. Ni is substantially absent in this deeper region of the valleys.

As described in the art, the nanostructured layer (5) is probably formed by particles eroded off the surface of the substrate by the USP-laser treatment to form the grooves (4g). Without wishing to be bound by any theory, as shown in Figure 9a, it is believed that the high energy of the laser beam (11L) forms a plasma (11p) I the valleys, creating conditions favouring reactions of the thus eroded particles such as the formation of oxides Al-Ni-O and Al-O, that are redeposited on the flanks of the valleys as these are being dug deeper. In the restricted space of the grooves (4g) oxygen becomes scarce. By adding a compound such as P or B in the NiX-layer (3) that enhances oxygen evolution reaction (OER), it is believed that oxygen is provided in the plasma (11p) in sufficient amounts to allow formation of oxides, but not enough to form oxides stoichiometrically. Again, without wishing to be bound by any theory, it is believed that the non-stoichiometric Al-NI-O oxides thus formed have themselves a black colour resulting from a high amount of oxygen vacancies that effectively reduce the band gap of the material. The amount of the component in the NiX-layer (3) has a substantial effect on emissivity as clearly shown in Figure 5f discussed supra.

### EMISSIVITY AND ABSORBANCE OF THE ULTRA BLACK SURFACES

Emissivity (*ε*) of the ultra black surfaces of the present invention and the dependence thereof on various parameters including peak-to-valley height (h) and layer thickness (t_Ni) has been discussed in detail supra with respect to Figures 5b to 5e and including the amount of the component in the NiX-layer (3) with respect to Figure 5f.

As defined supra, absorbance is defined as, A(*λ*) = 1 - R(*λ*), where R is the reflectance, Figures 4b to 4d plot the reflectance R as a function of reflected angle (*θ*r) with incident angles, *θ*i = 10°, 45°, and 70°. Two surfaces according to the present invention, labelled EX1 and EX2 are compared with two ultra black surfaces available on the market, CEX1 = Fractal Black^{™} and CEX2 = Magic Black^{™}, both produced by the company Acktar Ltd. The inventive surface EX1 has a NiX-layer (3) of thickness, t_Ni = 50 µm, and containing 11,5 wt.% P. The average peak-to-valley height, h = 90 µm. EX2 has a NiX-layer (3) of thickness, t_Ni = 45 µm, and containing 11 wt.% P. The average peak-to-valley height, h = 90 µm.

It can be seen from Figures 4b to 4d, that the surfaces EX1 and EX2 according to the present invention maintain low reflectance (i.e., high absorbance) over substantially the whole spherical reflection spectrum, with no outstanding peak, even at the very low incident angle, *θ*r = 10°. This is illustrated in Figure 4e, plotting as a function of the incident angle (*θ*i) the values of the reflectance measured at the reflected angle which the maximum reflectance of CEX1 was measured at, divided by the value of the maximum reflectance of CEX1. Fractal Black (= CEX1) in Figure 4e is therefore constant and equal to 100% as reference. Magic Black^{™} (= CEX2) behaves substantially better with a reduction of the reflectance at the angle of maximum reflectance of CEX1 between 50 and 80% lower than CEX1. Inventive surfaces EX1 and EX2 are even better with reduction of 80% to 98+% of reflectance measured at the corresponding angles..

Figure 4f plots the total hemispherical reflectance over the whole spectrum of *θ*r of the surfaces of EX1, EX2 and CEX1, CEX2, as a function of the wavelength (*λ*) of the incident radiation. It can be seen that the inventive surfaces EX1 and EX2 both maintain a very low reflectance of about 1 to 2% over the whole spectrum of wavelengths of up to *λ* = 20 µm. This is not the case with anyone of CEX1 and CEX2, whose reflectance increases substantially at higher wavelengths (*λ* > 10 µm for CEX2 and *λ* > 1 µm for CEX1), showing severe limitations of these two surfaces compared with the surfaces of the present invention.

The results plotted in Figure 4f were limited to wavelengths of up to 17 µm. The same measurements were carried out on a different piece of equipment allowing measuring reflectance to wavelengths higher than 17 µm, up to 35 µm. The measurements were carried out on a Bruker Vertex 70v equipped with a deuterated L-alanine doped triglycene sulphate detector (= DIaTG detector), which measures the total hemispherical reflection under vacuum and is liquid nitrogen cooled. The measured reflectance was below the detection limit of the equipment, lost within the background noise. This exceptional result is indicative of a very high level of absorption in the wavelength range of 17 to 35 µm. Future experiments plan to measure the total hemispherical reflection in the far infrared, up to several hundreds of µm using a He cooled bolometer setup.

### POSSIBLE MECHANISMS

The ultra black surfaces of the present invention yield very high absorbance and emissivity properties. More surprisingly, these excellent properties are maintained over wavelength ranges much broader than described in the literature. Indeed, absorbance values of at least 98% can be obtained for incident radiation wavelengths ranging from 300 nm to 20 µm (cf. e.g., Figure 4f). The mechanisms responsible for these excellent results are not all fully understood. In the following and without wishing to be bound by any theory, tentative mechanisms are proposed, based on analyses of the ultra black surfaces of the present invention which, in combination, could contribute to these excellent properties.

### Blacker than black?

The ultra black surfaces of the present invention are not "blacker than black" since they reflect 1% to 2% of the incident radiation, depending on the wavelength thereof. The high absorbance values measured on the ultra black surfaces of the present invention make them, however, very "black" compared with ultra black surfaces described or available in the art. A mechanism of radiation entrapment in the porosity of an ultra black surface is proposed by Huan et al. in [8], whereby light trapping plays a significant role in the absorbance properties. Huan et al. propose that light is reflected multiple times against the valley walls inside the randomly distributed large hollow and small hole embedding architecture, which helps converting the light energy into heat through iterative absorption. There is no doubt that the multiscale texture of the surface plays a significant role in light absorption, but Huan discards any significant contribution of the composition change of the textured surface provoked by the UPS-laser treatment. This conclusion seems in contradiction with our own observations.
⁸ Huan, H. et al., "Blackening of metals using femtosecondfiber laser" Applied Optics, 54, (2) (2015), 324-333

As shown in Figures 8a and 8b, the SEM-EDX analysis of cross-sections of textured surfaces according to the present invention revealed that the nanostructured layer (5) at the level of the NiX-layer (3) comprised large amounts of Ni and O and intermediate amounts of Al, whereas at the level of the Al-base (2), large amounts of Al and O were observed and practically no Ni was detected. Sub-stoichiometric NiₓO has a black colour and is even sold as a pigment. The presence of Al to form an Al-NI oxide could disrupt the structure of the oxide creating vacancies in the Ni-sites which may enhance the black colour. As discussed supra in relation with Figures 9a and 9b, the presence in the NiX-layer (3) of a compound enhancing oxygen evolution reaction (OER) of nickel, such as P or B is believed to favour the formation of oxygen in the plasma (11p) region in grooves (4g) being eroded by the USP-laser beam (11L), which contributes to the formation of the Al-Ni oxides nanoparticles (5p) which are redeposited onto the flanks of the grooves and thus forming the cauliflower or coral structure of the nanostructured layer (5).

Based on the results presented herein, it is assumed that the light entrapment mechanism alone proposed in [6] caused by a combination of microscopic valleys whose flanks are coated with nanoparticles and which prevents light from escaping the porosity of the surface, is not the sole mechanism responsible for the excellent absorption and emissivity properties measured on the surfaces of the present invention. It is assumed that the stoichiometry and crystalline nature of the nanostructured layer (5) coating the flanks of the valleys, including both Al-Ni oxides formed at the level of the NiX-layer (3) and Al-oxides formed at the level of the Al-base (2) also play a significant role in the properties of the ultra black surfaces of the present invention. To support this assumption, it suffices to compare the values of emissivity as a function of t_Ni / h in Figures 5d and 5e, showing a maximum of emissivity at a region wherein the protrusions (4p) comprise strata of both Ni-X layer (3) and Al-base (2), i.e., at values of t_Ni/ h comprised between 0.3 and 1.0 (note that at t_Ni/ h = 1, Al is still present at the very bottom of the grooves (4g)). Pure Al characterised by a ratio t_Ni / h = 0 and pure Ni characterised by a ratio t_Ni / h > 1, both yield lower values of emissivity, thus clearly suggesting a substantial contribution of the composition change of the textured surface to the properties thereof.

The ultra black surfaces of the present invention may not be "blacker than black", but clearly are "very black" due to a combination of structural porosity that acts as a light trap and of Al-NI oxides and Al oxides of given stoichiometry and crystalline lattice.

### High absorbance over broad range of wavelengths - 300 nm to 20 µm

The ultra black surfaces of the present invention are not only "very black", but they show a very low reflectance (i.e., a high absorbance) over a broad range of incident radiation wavelengths, spanning from 300 nm to 20 µm. Most prior art ultra black surfaces, which CEX1 and CEX2 in Figures 4b to 4f are only but two examples of, exhibit low reflectance values in the visible and near infrared regions, but generally show a substantial increase of the reflectance at higher wavelengths of the order of the µm or higher. As can be seen in Figure 4f, the reflectance of the ultra black surfaces EX1 and EX2 of the present invention remains low (below 2%) over the whole wavelength spectrum, whilst the comparative examples CEX1 and CEX2 of the market show a sudden and marked rise of the reflectance at wavelengths of about 10 µm and 1 ùm, respectively.

A plausible explanation for these good results could possibly be assigned to a multiscale texturing including three distinct structural elements, including,
- a first microscopic texture formed by the regular pattern (e.g., square pattern) defined by the grooves (4g) (cf. Figures 1a to 1e and 2),
- a second microscopic texture formed by the protrusions (4p) and grooves (4g) forming the valleys (cf. Figures 2 and 3a), and
- a nanoscale texture formed by the nanostructured layer (5) coating the surfaces of the protrusions (4p) (cf. Figure 3b).

It is believed that this three-level structure could be at least in part responsible for the absorption of radiations of very different wavelengths exhibited by the surfaces of the present invention, each structural element contributing to absorbing a corresponding range of wavelengths.

### PROCESS FOR PRODUCING THE ULTRA BLACK SURFACE

The present invention also concerns a process for forming the ultra black surface of the present invention. The process comprises providing a substrate and texturing the surface of the substrate with a USP-laser treatment. The substrate is as described supra and is formed by the metal base (2) made of aluminium or an aluminium alloy (= AI-alloy) and coated with the layer (3) of thickness (t_Ni), which defines a surface. Texturing the surface is carried out by scanning the surface with radiation pulses with an ultrashort pulsed (USP)-laser such as to form the multiscale micro and nano texture as described supra and thus obtain the ultra black surface of the present invention.

The structure of the texture created by the USP-laser treatment of a surface depends *inter alia* on the amount of energy applied to each point of the surface. The amount of energy applied to individual points of the surface depends mainly on the fluence (in [J / cm²]), the pitch (in [mm]), the focal spot diameter (in [mm]), the scanning speed (in mm / s]), the frequency (in [Hz]), and on the number of passes.

For example, the USP-laser can be set to have a pulse duration comprised between 1 fs to 10 ps. A fs-laser can work in the range of 50 fs to 1000 fs, preferably of 80 to 500 fs. A ps-laser can work in the range of 1 ps to 500 ps, preferably of 10 ps to 300 ps.

The fluence is important since, for all other conditions fixed, it controls the amount of energy applied by each spot to the surface. A low value of the fluence can, however, be compensated by a higher degree of overlap, a higher number of passes, and / or a slower scanning speed. The fluence is preferably comprised between 2.0 or 2.5 and 10 J / cm², preferably between 3,4 - 8 J / cm².

The frequency of the beam can be comprised between 50 and 500 kHz, preferably between 70 and 250 kHz. The scanning speed can vary between 50 or 100 and 4000 mm / s, preferably between 200 and 2000 mm / s. A number of 20 to 1600 passes, preferably 800 to 1600 passes is preferred. The peak-to-valley height (h) is directly related to the number of passes.

The pitch (D) separating two successive spots can be comprised between 15 and 50 µm, preferably between 25 and 45 µm. The focal spot diameter can be comprised between 10 and 30 µm. Depending on the focal spot diameter, the pitch is preferably selected such as to have a degree of overlap comprised in the range, Φ > -0.5, as discussed in more detail below.

As shown in Figures 6a to 6d, the overlap (Φ) between successive spots depends on the ratio (d / D), wherein d is the focal spot diameter and D is the pitch. If the focal spot diameter (d) is greater than the pitch (D) then there is overlap (i.e., if d / D > 1, there is overlap). The degree of overlap can be defined as Φ = -δ / d = 1 - (D / d), wherein *δ* is the distance separating corresponding edges of two spots, and *δ* is negative if two spots overlap and *δ* is positive if the two spots are separate. Two spots overlap when the degree of overlap is positive, i.e., Φ = -*δ* / d > 0 (cf. Figure 6b), and they are abutting or separate when Φ = -*δ* / d is null or negative, i.e., Φ = -*δ* / d ≤ 0 (cf. Figures 6c and 6d). As shown in Figure 6a, at a value of Φ = -δ / d = 1, two spots are superimposed and the spot remains at the same place, so that scanning is not possible.

As shown in Figures 7a and 7b, reporting the same values of emissivity plotted as a function of d / D in Figure 7a and of the degree of overlap, Φ = -*δ* / d, in Figure 7b, it was observed that the degree of overlap has a major influence on the emissivity of the treated surface, with a maximum plateau reached at a level of overlap larger than about -0.5 (i.e., Φ > -0.5 or d / D > 0.7), i.e., two spots are separated from one another by a distance less than half a diameter (d). Based on these results, it is preferred that the degree of overlap (Φ) between successive spots be comprised in the range, Φ > -0.5 (or d / D > 0.7), preferably in the range, Φ = -0.3 to 0.98 (or d / D = 0.7 to 50), more preferably in the range, Φ = -0.1 to 0.9 (or d / D = 0.9 to 10), most preferably, Φ = 0 to 0.6 (or d / D = 1.0 to 2.5).

| **#** | **Feature** |
|---|---|
| 1 | Ultra black surface |
| 2 | Metal base |
| 3 | NiX-layer |
| 4p | Protrusion |
| 4g | Groove separating two protrusions |
| 5 | Nanostructured layer |
| 5p | Nanoparticles |
| 11L | Laser beam |
| 11p | Plasma formed in a groove |
| d | Laser spot diameter |
| D | Distance between two successive laser spots |
| h | Peak-to-valley height of protrusions |
| w4 | Width of a top of a protrusion |
| wg | Width of a top of a groove |
| t5 | Thickness of the nanostructured layer (5) |
| t_Ni | Thickness of the Ni-X layer (3) |
| θi, θr | Incident and reflected angles |
| λ | Wavelength |
| Φ | Overlap between two successive laser spots |

## Claims

1. Ultra black surface (1) comprising,
• a substrate formed by a metal base (2) made of a first material, coated with a layer having a thickness (t_Ni) and made of a second material, different from the first material, and defining in combination the ultra-black surface, wherein
• the ultra-black surface is structured with a multiscale micro and nano texture formed by a ultrashort pulsed (USP)-laser treatment,
wherein,
• the first material of the metal base (2) is aluminium or an aluminium alloy (= Al-alloy),
• the second material of the layer is a nickel-alloy (= NiX-layer (3)), wherein the NiX-layer (3) comprises at least 5 wt.% of a compound enhancing oxygen evolution reaction (OER) of nickel, preferably selected among P and B,
• the multiscale micro and nano texture comprises,
∘ microtexture comprising protrusions (4p) arranged side-by-side separated from one another by grooves (4g) defining a peak-to-valley height (h) not lower than the layer thickness (i.e., h ≥ t_Ni), wherein a thickness to height ratio (t_Ni / h) of the layer thickness (t_Ni) to the peak-to-valley height (h) is preferably comprised between 30 and 80%, more preferably between 40 and 67%, and
∘ a nanotexture comprising a nanostructured layer (5) coating the surfaces of the protrusions and comprising Al-Ni oxides with varying values of a molar Al to Ni ratio,
and wherein, the ultra-black surface has an absorbance of at least 95% over a wavelength (*λ*) extending from 300 nm to 20 µm, and an emissivity of at least 0,95 in a wavelength range of 3 to at least 35 µm, wherein the absorbance and emissivity are measured according to standards ECSS-Q-70-09A and ASTM E 490.

2. Ultra black surface according to claim 1, wherein the compound in the layer (3) is phosphorus (P) or boron (B) and is present in an amount comprised between 7 and 17 wt.% of P or B, preferably between 8 and 15 wt.% based on the total weight of the layer (3).

3. Ultra black surface according to claim 1 or 2, wherein, · the peak-to-valley height (h) is comprised between 60 and 120 µm, preferably between 80 and 105 µm and / or
the thickness (t_Ni) of the layer is comprised between 20 and 100 µm, preferably between 30 and 80 µm, more preferably between 50 and 75 µm, and / or
a ratio (t_Ni / h) of the layer thickness (t_Ni) to the peak-to-valley height (h) is comprised between 0.3 and 1.0, preferably between 0.5 and 0.9, and / or
the tops of the protrusions (4p) have a width (w4) measured along a groove (4g) comprised between 25 and 50 µm, preferably between 30 and 40 µm.

4. Ultra black surface according to any one of the preceding claims, wherein the nanostructured layer (5) has a thickness comprised between 1 and 12 µm, preferably between 2 and 10 µm, more preferably between 4 and 8 µm.

5. Ultra black surface according to any one of the preceding claims, wherein the grooves (4g), have a width (wg) at the top of the protrusions comprised between 5 and 25 µm, preferably between 7 and 18 µm, and wherein the grooves (4g),
• are rectilinear and extend along two directions forming a diamond lattice, preferably a rectangular or a square lattice, or
• are rectilinear and extend along three directions forming a triangular lattice, or
• form segmented lines forming a polygonal lattice of more than 4 sides, preferably forming a hexagonal lattice, or
• form curved lines winding along at least two directions, preferably along two or three directions.

6. Ultra black surface according to any one of the preceding claims, wherein the nanostructured layer (5) comprises,
• aluminium-nickel oxides (Al-Ni-O) in greater amounts at the level of the layer (3) than at the level of the metal base (2) and
• aluminium oxides (Al-O) in greater amounts at the level of the metal base (2) than at the level of the layer (3).

7. Ultra black surface according to any one of the preceding claims, having an absorbance of at least 98%, preferably at least 99% in a wavelength range extending between 300 nm and 5 µm, and / or having an emissivity of at least 0,98, preferably at least 0,99 in the wavelength range of 3 to at least 35 µm.

8. Process for forming the ultra black surface according to any one of the preceding claims, comprising,
• providing the substrate as defined in claim 1, formed by the metal base (2) made of aluminium or an aluminium alloy (= AI-alloy) and coated with the layer (3) of thickness (t_Ni), which defines a surface,
• irradiating the surface with ultrashort pulsed (USP)-laser pulses such as to form the multiscale micro and nano texture as defined in claim 1 and thus obtain the ultra black surface.

9. Process according to the preceding claim, wherein the successive USP laser pulses overlap (Φ) from -0.3 to 0.9, preferably from 0 to 0.6, wherein Φ = 1 - (D / d), with D is a distance between two successive pulse spots and d is a diameter of the pulse spots, wherein both D and d are measured along a direction of displacement of a USP-laser beam (11L).

10. Process according to claims 8 or 9, wherein the USP-laser is set to operate according to one or more of the following,
• a pulse duration comprised in the range of 50 fs to 10 ps, and / or
• a fluence is comprised between 2 and 10 J / cm³, preferably between 3,4 - 8 J / cm², and / or
• a frequency is comprised between 50 and 500 kHz, and / or
• a pitch comprised between laser paths of 25 to 45 µm, and / or
• a scanning speed between 50-4000 mm / s, preferably between 100 and 2000 mm / s, and / or
• a spot Diameter of 10-30 µm
• a number of laser passes comprised between 20 to 1600, preferably between 800 and 1600.

## Patentansprüche

1. Ultraschwarze Oberfläche (1), die Folgendes umfasst:
- ein Substrat, das aus einer Metallbasis (2) gebildet ist, die aus einem ersten Material hergestellt ist, das mit einer Schicht beschichtet ist, die eine Dicke (t_Ni) aufweist und aus einem zweiten Material hergestellt ist, das sich von dem ersten Material unterscheidet und das in Kombination die ultraschwarze Oberfläche definiert, wobei
- die ultraschwarze Oberfläche mit einer mehrskaligen Mikro- und Nanotextur strukturiert ist, die durch eine Ultrakurzpulslaserbehandlung (USP-Laserbehandlung) gebildet wird,
wobei,
- das erste Material der Metallbasis (2) Aluminium oder eine Aluminiumlegierung (= Al-Legierung) ist,
- das zweite Material der Schicht eine Nickellegierung (= NiX-Schicht (3)) ist, wobei die NiX-Schicht (3) mindestens 5 Gew.-% einer Verbindung umfasst, die die Sauerstoffentwicklungsreaktion (OER) von Nickel verstärkt, bevorzugt ausgewählt aus P und B,
- die mehrskalige Mikro- und Nanotextur Folgendes umfasst:
- Mikrotextur, die Vorsprünge (4p) umfasst, die Seite an Seite, eingerichtet sind, die voneinander durch Nuten (4g) getrennt sind, die eine Spitze-zu-Tal-Höhe (h) definieren, die nicht niedriger ist als die Schichtdicke ist (d. h. h ≥ t_Ni), wobei ein Dicke-zu-Höhe-Verhältnis (t_Ni/h) der Schichtdicke (t_Ni) zu der Spitze-zu-Tal-Höhe (h) bevorzugt zwischen 30 und 80 %, bevorzugter zwischen 40 und 67 % liegt, und
- eine Nanostruktur, die eine nanostrukturierte Schicht (5) umfasst, die die Oberflächen der Vorsprünge überzieht und Al-Ni-Oxide mit variierenden Werten eines molaren Al-Ni-Verhältnisses umfasst,
und wobei die ultraschwarze Oberfläche eine Absorbanz von mindestens 95 % über eine Wellenlänge (λ) aufweist, die sich von 300 nm bis 20 µm erstreckt, und einen Emissionsgrad von mindestens 0,95 in einem Wellenlängenbereich von 3 bis mindestens 35 µm, wobei die Absorbanz und der Emissionsgrad gemäß den Normen ECSS-Q-70-09A und ASTM E 490 gemessen werden.

2. Ultraschwarze Oberfläche nach Anspruch 1, wobei die Verbindung in der Schicht (3) Phosphor (P) oder Bor (B) ist und in einer Menge zwischen 7 und 17 Gew.-% P oder B, bevorzugt zwischen 8 und 15 Gew.-%, bezogen auf das Gesamtgewicht der Schicht (3), vorliegt.

3. Ultraschwarze Oberfläche nach Anspruch 1 oder 2, wobei die Spitze-zu-Tal-Höhe (h) zwischen 60 und 120 µm, bevorzugt zwischen 80 und 105 µm beträgt, und / oder
die Dicke (t_Ni) der Schicht zwischen 20 und 100 µm, bevorzugt zwischen 30 und 80 µm, bevorzugter zwischen 50 und 75 µm liegt, und / oder
ein Verhältnis (t_Ni/h) der Schichtdicke (t_Ni) zu der Spitze-zu-Tal-Höhe (h) zwischen 0,3 und 1,0, bevorzugt zwischen 0,5 und 0,9 liegt, und / oder
die Oberseiten der Vorsprünge (4p) eine Breite (w4), gemessen entlang einer Nut (4g), zwischen 25 und 50 µm, bevorzugt zwischen 30 und 40 µm, aufweisen.

4. Ultraschwarze Oberfläche nach einem der vorstehenden Ansprüche, wobei die nanostrukturierte Schicht (5) eine Dicke zwischen 1 und 12 µm, bevorzugt zwischen 2 und 10 µm, bevorzugter zwischen 4 und 8 µm aufweist.

5. Ultraschwarze Oberfläche nach einem der vorstehenden Ansprüche, wobei die Nuten (4g) eine Breite (wg) an der Oberseite der Vorsprünge zwischen 5 und 25 µm, bevorzugt zwischen 7 und 18 µm aufweisen und wobei die Nuten (4g)
- geradlinig sind und sich in zwei Richtungen erstrecken, die ein Rautengitter, bevorzugt ein rechteckiges oder quadratisches Gitter, bilden, oder
- geradlinig sind und sich in drei Richtungen erstrecken, die ein Dreiecksgitter bilden, oder
- segmentierte Linien bilden, die ein polygonales Gitter aus mehr als 4 Seiten, die bevorzugt ein hexagonales Gitter bilden, oder
- gekrümmte Linien bilden, die sich in mindestens zwei Richtungen, bevorzugt entlang von zwei oder drei Richtungen winden.

6. Ultraschwarze Oberfläche nach einem der vorstehenden Ansprüche, wobei die nanostrukturierte Schicht (5) Folgendes umfasst:
- Aluminium-Nickel-Oxide (Al-Ni-O) in größeren Mengen auf der Ebene der NiX-Schicht (3) als auf der Ebene der Metallbasis (2) und
- Aluminiumoxide (Al-O) in größeren Mengen auf der Ebene der Metallbasis (2) als auf der Ebene der NiX-Schicht (3).

7. Ultraschwarze Oberfläche nach einem der vorstehenden Ansprüche, die eine Absorbanz von mindestens 98 %, bevorzugt mindestens 99 % in einem Wellenlängenbereich zwischen 300 nm und 5 µm aufweist, und / oder einen Emissionsgrad von mindestens 0,98, bevorzugt mindestens 0,99 in dem Wellenlängenbereich von 3 bis mindestens 35 µm aufweist.

8. Prozess zum Bilden der ultraschwarzen Oberfläche nach einem der vorstehenden Ansprüche, das Folgendes umfasst:
- Bereitstellen des Substrats, wie in Anspruch 1 definiert, das aus der Metallbasis (2), die aus Aluminium oder einer Aluminiumlegierung (= Al-Legierung) hergestellt ist und mit der Schicht (3) der Dicke (t_Ni) beschichtet ist, die eine Oberfläche definiert,
- Bestrahlen der Oberfläche mit Ultrakurzpulslaserpulsen (USP-Laserpulsen), um die in Anspruch 1 definierte mehrskalige Mikro- und Nanotextur zu bilden und daher die ultraschwarze Oberfläche zu erhalten.

9. Prozess nach dem vorstehenden Anspruch, wobei sich die aufeinanderfolgenden USP-Laserpulse (Φ) von -0,3 bis 0,9, bevorzugt von 0 bis 0,6 überlappen, wobei Φ = 1-(D / d), wobei D ein Abstand zwischen zwei aufeinanderfolgenden Pulsflecken und d der Durchmesser der Pulsflecken ist, wobei sowohl D als auch d entlang der Verschiebungsrichtung eines USP-Laserstrahls (11L) gemessen werden.

10. Prozess nach Anspruch 8 oder 9, wobei der USP-Laser dazu eingestellt ist, nach einem oder mehreren der folgenden Aspekte zu arbeiten:
- einer Impulsdauer im Bereich von 50 fs bis 10 ps, und / oder
- einer Fluenz zwischen 2 und 10 J /cm³, bevorzugt zwischen 3,4 und 8 nJ /cm2 und / oder
- einer Frequenz zwischen 50 und 500 kHz, und / oder
- einem Abstand zwischen Laserbahnen von 25 bis 45 µm, und / oder
- einer Scangeschwindigkeit zwischen 50 und 4000 mm / s, bevorzugt zwischen 100 und 2000 mm / s und / oder
- einem Spotdurchmesser von 10-30 µm
- einer Anzahl von Laserdurchgängen zwischen 20 und 1600, bevorzugt zwischen 800 und 1600.

## Revendications

1. Surface ultra-noire (1) comprenant,
- un substrat formé d'une base métallique (2) constituée d'un premier matériau, revêtue d'une couche présentant une épaisseur (t_Ni) et constitué d'un second matériau, différent du premier matériau, et définissant par combinaison la surface ultra-noire, dans laquelle
- la surface ultra-noire est structurée par une micro- et nanotexture multi-échelle formée par un traitement laser à impulsions ultra-courtes (USP),
dans laquelle,
- le premier matériau de la base métallique (2) est l'aluminium ou un alliage d'aluminium (= alliage d'Al),
- le second matériau de la couche est un alliage de nickel (= couche NiX (3)), dans laquelle la couche NiX (3) comprend au moins 5 % en poids d'un composé améliorant la réaction d'évolution de l'oxygène (OER) du nickel, de préférence sélectionné parmi P et B,
- la micro- et nanotexture multi-échelle comprend,
- une microtexture comprenant des saillies (4p) agencées côte à côte et séparées les unes des autres par des rainures (4g) définissant une hauteur crête-vallée (h) non inférieure à l'épaisseur de la couche (c.-à-d. h ≥ t_Ni), dans laquelle un rapport épaisseur/hauteur (t_Ni/h) de l'épaisseur de la couche (t_Ni) sur la hauteur crête-vallée (h) est de préférence compris entre 30 et 80 %, plus préférentiellement entre 40 et 67 %, et
- une nanotexture comprenant une couche nanostructurée (5) recouvrant les surfaces des saillies et comprenant des oxydes AI-Ni avec des valeurs variables d'un rapport molaire AI sur Ni,
et dans laquelle la surface ultra-noire présente une absorbance d'au moins 95 % sur une longueur d'onde (λ) s'étendant de 300 nm à 20 µm, et une émissivité d'au moins 0,95 dans une plage de longueur d'onde de 3 à au moins 35 µm, dans laquelle l'absorbance et l'émissivité sont mesurées selon les normes ECSS-Q-70-09A et ASTM E 490.

2. Surface ultra-noire selon la revendication 1, dans laquelle le composé de la couche (3) est du phosphore (P) ou du bore (B) et est présent en une quantité comprise entre 7 et 17 % en poids de P ou B, de préférence entre 8 et 15 % en poids sur la base du poids total de la couche (3).

3. Surface ultra-noire selon la revendication 1 ou 2, dans laquelle la hauteur crête-vallée (h) est comprise entre 60 et 120 µm, de préférence entre 80 et 105 µm, et/ou
l'épaisseur (t_Ni) de la couche est comprise entre 20 et 100 µm, de préférence entre 30 et 80 µm, plus préférentiellement entre 50 et 75 µm, et/ou
un rapport (t_Ni/h) de l'épaisseur de la couche (t_Ni) sur la hauteur crête-vallée (h) est compris entre 0,3 et 1,0, de préférence entre 0,5 et 0,9, et/ou
les sommets des saillies (4p) présentent une largeur (w4) mesurée le long d'une rainure (4g) comprise entre 25 et 50 µm, de préférence entre 30 et 40 µm.

4. Surface ultra-noire selon l'une quelconque des revendications précédentes, dans laquelle la couche nanostructurée (5) présente une épaisseur comprise entre 1 et 12 µm, de préférence entre 2 et 10 µm, plus préférentiellement entre 4 et 8 µm.

5. Surface ultra-noire selon l'une quelconque des revendications précédentes, dans laquelle les rainures (4g) présentent une largeur (wg) au sommet des saillies comprise entre 5 et 25 µm, de préférence entre 7 et 18 µm, et dans laquelle les rainures (4g),
- sont rectilignes et s'étendent le long de deux directions formant un réseau en losange, de préférence un réseau rectangulaire ou carré, ou
- sont rectilignes et s'étendent le long de trois directions, formant un réseau triangulaire, ou
- forment des lignes segmentées formant un réseau polygonal à plus de 4 côtés, de préférence formant un réseau hexagonal, ou
- forment des lignes courbes s'enroulant le long d'au moins deux directions, de préférence le long de deux ou trois directions.

6. Surface ultra-noire selon l'une quelconque des revendications précédentes, dans laquelle la couche nanostructurée (5) comprend,
- des oxydes d'aluminium-nickel (Al-Ni-O) en plus grande quantité au niveau de la couche NiX (3) qu'au niveau de la base métallique (2) et
- des oxydes d'aluminium (Al-O) en plus grande quantité au niveau de la base métallique (2) qu'au niveau de la couche NiX (3).

7. Surface ultra-noire selon l'une quelconque des revendications précédentes, présentant une absorbance d'au moins 98 %, de préférence d'au moins 99 % dans une plage de longueurs d'onde s'étendant entre 300 nm et 5 µm, et/ou présentant une émissivité d'au moins 0,98, de préférence d'au moins 0,99 dans la plage de longueurs d'onde de 3 à au moins 35 µm.

8. Procédé de formation de la surface ultra-noire selon l'une quelconque des revendications précédentes, comprenant :
- la fourniture du substrat selon la revendication 1, formé par la base métallique (2) constituée d'aluminium ou d'un alliage d'aluminium (= alliage d'Al) et revêtue de la couche (3) d'épaisseur (t_Ni), qui définit une surface,
- l'irradiation de la surface avec des impulsions laser ultracourtes (USP) afin de former la micro- et nanotexture multi-échelle selon la revendication 1 et ainsi obtenir la surface ultra-noire.

9. Procédé selon la revendication précédente, dans lequel les impulsions laser USP successives se chevauchent (Φ) de -0,3 à 0,9, de préférence de 0 à 0,6, dans lequel Φ = 1-(D/d), où D est une distance entre deux points d'impulsion successifs et d est un diamètre des points d'impulsion, dans lequel D et d sont tous deux mesurés le long d'une direction de déplacement d'un faisceau laser USP (11L).

10. Procédé selon les revendications 8 ou 9, dans lequel le laser USP est réglé pour fonctionner selon un ou plusieurs des éléments suivants :
- une durée d'impulsion comprise dans la plage de 50 fs à 10 ps, et/ou
- une fluence est comprise entre 2 et 10 J/cm³, de préférence entre 3,4 et 8 J/cm², et/ou
- une fréquence est comprise entre 50 et 500 kHz, et/ou
- un pas compris entre des trajets laser de 25 à 45 µm, et/ou
- une vitesse de balayage comprise entre 50 et 4 000 mm/s, de préférence entre 100 et 2 000 mm/s, et/ou
- un diamètre de point de 10 à 30 µm,
- un nombre de passages laser compris entre 20 et 1 600, de préférence entre 800 et 1 600.
